(19) Europäisches Patentamt
European Patent Office
Office européen des brevets

(11) Veröffentlichungsnummer: **0 106 104**
**B1**

(12) # EUROPÄISCHE PATENTSCHRIFT

(45) Veröffentlichungstag der Patentschrift: **16.03.88**

(21) Anmeldenummer: **83108704.4**

(22) Anmeldetag: **03.09.83**

(51) Int. Cl.⁴: **C 09 B 67/22,** C 09 B 29/085, C 09 B 67/48, C 09 B 67/10, D 06 P 1/18

(54) **Mischungen von Monoazofarbstoffen.**

(30) Priorität: **15.09.82 DE 3234186**

(43) Veröffentlichungstag der Anmeldung: **25.04.84 Patentblatt 84/17**

(45) Bekanntmachung des Hinweises auf die Patenterteilung: **16.03.88 Patentblatt 88/11**

(84) Benannte Vertragsstaaten: **BE CH DE FR GB IT LI**

(56) Entgegenhaltungen:
**EP-A-0 036 512**
**EP-A-0 093 935**
**FR-A-2 193 062**

(73) Patentinhaber: **CASSELLA Aktiengesellschaft, Hanauer Landstrasse 526, D-6000 Frankfurt am Main 61 (DE)**

(72) Erfinder: **Bühler, Ulrich, Dr., Kastanienweg 8, D-8755 Alzenau (DE)**
Erfinder: **Hofmann, Klaus, Meerholzerstrasse 50, D-6000 Frankfurt/Main 61 (DE)**

(74) Vertreter: **Urbach, Hans- Georg, Dr., Hanauer Landstrasse 526, D-6000 Frankfurt am Main 61 (DE)**

**EP 0 106 104 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft Mischungen von Monoazofarbstoffen die dadurch gekennzeichnet sind, daß sie aus zwei oder mehr verschiedenen Farbstoffen der Formel I

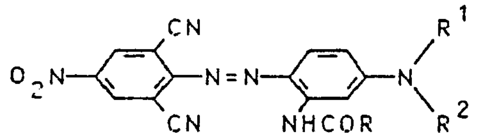

(I)

worin $R^1$ und $R^2$ unabhängig voneinander lineares oder verzweigtes Alkyl mit 1 bis 4 C-Atomen und R lineares oder verzweigtes Alkyl mit 1 bis 5 C-Atomen bedeuten und wobei sich die Farbstoffe zumindest in den Resten R unterscheiden, bestehen, wobei solche Mischungen aus mindestens zwei verschiedenen Farbstoffen der Formel I, in welcher $R^1$ und $R^2$ Ethyl oder n-Propyl und R Methyl, Ethyl oder n-Propyl bedeuten und in denen mindestens eine Farbstoffkomponente mit R = n-Propyl enthalten ist, ausgeschlossen sind.

Die Erfindung betrifft auch Verfahren zur Herstellung der erfindungsgemäßen Farbstoffmischungen sowie ihre Verwendung zum Färben und Bedrucken von hydrophoben Fasermaterialien.

Mischungen aus mindestens zwei verschiedenen Farbstoffen der Formel I, in welcher $R^1$ und $R^2$ Ethyl oder n-Propyl und R Methyl, Ethyl oder n-Propyl bedeuten, mit der Maßgabe, daß mindestens eine Farbstoffkomponente der angegebenen Formel, worin $R^1$ für n-Propyl steht, enthalten ist, sind in der nicht vorveröffentlichten EP-A-0-093 935 beansprucht. Sie werden aus dem Schutzumfang der vorliegenden Erfindung durch Disclaimer ausgenommen.

Es ist bereits bekannt, daß Gemische aus mindestens zwei verschiedenen Einzelfarbstoffen der Formel I verbesserte färberische Eigenschaften im Vergleich zu den Einzelfarbstoffen besitzen. Deutlich höhere Mischungseffekte ergeben sich dabei jedoch nur dann, wenn sich die Farbstoffe bezüglich des Restes R nicht unterscheiden und wenn der Rest R gleich Acetyl ist (vgl. DE-AS-22 34 465, Spalte 4, Zeilen 30 bis 39).

Es wurde nun überraschenderweise gefunden, daß die erfindungsgemäßen Mischungen wesentlich verbesserte färberische Eigenschaften gegenüber den Einzelfarbstoffen und zum Teil auch gegenüber den Mischungen der DE-AS-22 34 465 besitzen.

Die erfindungsgemäßen Farbstoffmischungen bestehen aus zwei oder mehr verschiedenen, z. B. 2, 3 oder 4 verschiedenen Farbstoffen der Formel I. Bevorzugt sind erfindungsgemäße Farbstoffmischungen, die aus 2 verschiedenen Farbstoffen der Formel I bestehen.

Bevorzugt sind auch Farbstoffmischungen, die aus Farbstoffen der Formel I und der dazugehörigen Definitioon (Disclaimer!) bestehen, wobei $R^1$ und $R^2$ lineares Alkyl mit 2 bis 4 C-Atomen oder R lineares oder verzweigtes Alkyl mit 1 bis 3 C-Atomen bedeuten. Besonders bevorzugt sind solche Farbstoffmischungen, bei denen die Einzelfarbstoffe beide vorgenannten Bedingungen erfüllen, d.h. bei denen $R^1$ und $R^2$ lineares Alkyl mit 2 bis 4 C-Atomen und R lineares oder verzweigtes Alkyl mit 1 bis 3 G-Atomen bedeuten. Bevorzugt sind weiter Farbstoffmischungen, die wie oben aus Farbstoffen der Formel I bestehen wobei $R^1$ und $R^2$ identisch sind und besonders bevorzugt $R^1$ und $R^2$ Ethyl oder n-Propyl bedeuten. Ganz besonders bevorzugt sind Farbstoffmischungen, die wie oben aus zwei verschiedenen Farbstoffen der Formel I bestehen, bei denen $R^1$ und $R^2$ Ethyl bedeuten. Ganz besonders bevorzugt sind dabei für R die Kombinationen Methyl/ n-Propyl, Ethyl/n-Propyl und n-Propyl/i-Propyl.

Besonders bevorzugt sind auch Farbstoffmischungen, die im Verlaufe ihrer Herstellung auf Temperaturen von mindestens 80°C erhitzt worden sind, bzw. solche Farbstoffmischungen, die aus Mischkristallen bestehen, die aus zwei oder mehreren der Farbstoffe der Formel I gebildet sind.

In den erfindungsgemäßen Farbstoffmischungen kann das Verhältnis der verschiedenen Farbstoffe der allgemeinen Formel I in relativ weiten Grenzen variieren. Im allgemeinen beträgt der Mindestgewichtsanteil einer Komponente 10 % und der maximale Gewichtsanteil 90 %. Bei Farbstoffmischungen, die nur aus zwei Farbstoffen der allgemeinen Formel I bestehen, ist ein Mengenverhältnis von 70/30 bis 30/70 bevorzugt, d.h. der Gewichtsanteil eines Farbstoffs beträgt 30 bis 70 %.

Die erfindungsgemäßen Farbstoffmischungen können nach verschiedenen Verfahren hergestellt werden. Einmal durch Mischung von mindestens zwei Einzelfarbstoffen der Formel I - vorzugsweise unter Zusatz von Dispergiermitteln. Dieser Mischprozeß erfolgt bei Temperaturen von 0 bis 190°C, zweckmäßigerweise in geeigneten Mühlen, beispielsweise Kugel- und Sandmühlen, sowie Knetern, kann aber auch durch Mischen mit der Hand oder durch Einrühren in Dispersionsmittel oder Färbeflotten bewirkt werden.

Als Dispergiermittel kommen solche anionischer oder nichtanionischer Natur in Betracht. Als anionische Dispergiermittel seien genannt Kondensationsprodukte von Naphthalin, Formaldehyd und Schwefelsäure sowie Ligninsulfonate. Nichtionische Dispergiermittel sind z. B. in der DE-OS-27 57 330 beschrieben. Die Einzelfarbstoffe der Formel I sind bekannt und z. B. in der deutschen Patentschrift 17 94 402 und in der deutschen Offenlegungsschrift 30 09 635 beschrieben.

Ein weiteres Verfahren zur Herstellung der erfindungsgemäßen Farbstoffmischungen ist dadurch gekennzeichnet, daß man ein Amin der Formel II

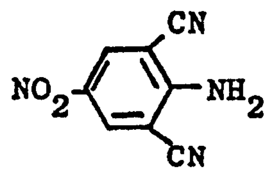

(II)

diazotiert und auf eine Mischung aus mindestens zwei verschiedenen Kupplungskomponenten der Formel III

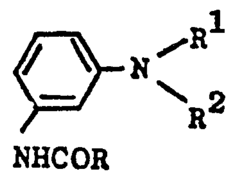

(III)

in der $R^1$, $R^2$ und R die oben angegebenen Bedeutungen haben, kuppelt. Die Zusammensetzung der Mischung der Kupplungskomponenten wird dabei so gewählt, daß erfindungsgemäße Farbstoffmischungen entstehen. Die Diazotierung und Kupplung wird dabei in an sich bekannter Weise durchgeführt, wie sie für die Herstellung von Einzelfarbstoffen üblich und z. B. in der tschechischen Patentschrift 164 657 beschrieben ist.

Nach einem bevorzugten weiteren Verfahren können die neuen Farbstoffmischungen dadurch hergestellt werden, daß man in Farbstoffmischungen, die aus mindestens zwei Farbstoffen der Formel IV

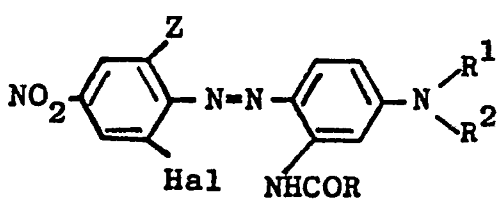

(IV)

bestehen, in der Z für Cyan oder Halogen und Hal für Halogen, vorzugsweise Brom, steht und $R^1$, $R^2$ und R die oben angegebenen Bedeutungen haben, in an sich bekannter Weise Halogen gegen Cyan austauscht, wie es z. B. in der britischen Patentschrift 1 125 685 für Einzelfarbstoffe beschrieben ist. Die Zusammensetzung der Mischung der Farbstoffe der Formel IV wird dabei so gewählt, daß erfindungsgemäße Farbstoffmischungen entstehen.

Farbstoffmischungen, die im Verlauf ihrer Herstellung auf Temperaturen von mindestens 80°C, z. B. auf Temperaturen von 80 bis 190°C, insbesondere 90 bis 150°C, vorzugsweise 100 bis 140°C, erhitzt worden sind, können dadurch hergestellt werden, daß man die Einzelfarbstoffe in Substanz oder bevorzugt in einem Dispersionsmittel, wie z. B. Wasser, 0,5 bis 3 Stunden lang auf die genannten Temperaturen erhitzt, dann abkühlt, in der Regel isoliert und dann miteinander vermischt. Die Erhitzung kann gegebenenfalls auch im Rahmen einer Umkristallisation der Einzelfarbstoffe durchgefuhrt werden. Die Erhitzung in Wasser auf Temperaturen uber 100°C wird in einem geschlossenen Gefäß durchgeführt. Bei der Erhitzung in einem Dispersionsmittel kann der Zusatz eines oder mehrerer der weiter unten angegebenen Dispergiermittel zweckmäßig sein.

Wenn man ein aus zwei oder mehreren Einzelfarbstoffen bestehendes Farbstoffgemisch auf die vorstehend genannten Temperaturen erhitzt, werden in der Regel Mischkristalle erhalten, die aus zwei oder mehr verschiedenen Farbstoffen der Formel I bestehen.

Erfindungsgemäße aus Mischkristallen bestehende Farbstoffmischungen können auch dadurch hergestellt werden, daß man eine Mischung aus mindestens zwei getrennt hergestellten, verschiedenen Farbstoffen der Formel I, die z. B. in der deutschen Patentschrift 1 794 402 oder in der deutschen Offenlegungsschrift 30 09 695 beschrieben sind, auflöst und zur Kristallisation oder Ausfällung bringt. Zur Auflösung der Farbstoffmischung sind z. B. organische Lösungsmittel, wie Dimethylformamid, Dimethylsulfoxid, Chlorbenzol, o-Dichlorbenzol, Toluol etc. geeignet. Auch Gemische verschiedener Lösungsmittel können verwendet werden. Die Auflösung erfolgt zweckmäßigerweise bei der Siedetemperatur des Lösungsmittels oder Lösungsmittelgemischs. Beim Abkühlen kristallisieren dann Mischkristalle aus. Statt durch Abkühlung können die Mischkristalle auch durch Ausfällung, d.h. durch Zusatz eines Lösungsmittels, in dem der Farbstoff weniger löslich ist, zur Abscheidung gebracht werden.

Besonders bevorzugt werden Mischkristalle auch erhalten, wenn man den oben erwähnten Austausch von Cyan gegen Halogen bei einem aus Farbstoffen der Formel IV bestehenden Gemisch bei Temperaturen von mindestens 80°C durchführt.

Die Mischkristallbildung kann bevorzugt auch so durchgeführt werden, daß man eine Mischung aus mindestens zwei getrennt hergestellten, verschiedenen Farbstoffen der Formel I in einem schlecht lösenden

Lösungsmittel oder Dispersionsmittel anwärmt, wobei nur eine teilweise bis herab zu einer verschwindend geringen Auflösung stattfindet, und die Mischung dadurch in Mischkristalle umwandelt. Als besonders geeignetes Lösungs- oder besser gesagt Dispersionsmittel für eine derartige Umwandlung der Farbstoffmischungen in Mischkristalle hat sich Wasser bei Temperaturen von 80 bis 190° C, insbesondere 90 bis 150° C, vorzugsweise 100 bis 140° C, erwiesen. Es ist selbstverständlich, daß die Erhitzung bei Temperaturen, die nicht mehr in einem offenen Gefäß erreicht werden können, in einem Autoklaven durchgeführt werden. Der Zusatz eines oder mehrerer Lösungsvermittler ist dabei zweckmäßig. Ein solcher Lösungsvermittler ist z. B. ein in Wasser ganz lösliches Lösungsmittel, wie z. B. Ethanol, oder ein in Wasser nur teilweise lösliches organisches Lösungsmittel, wie z. B. n-Butanol.

Besonders bevorzugt wird jedoch die Umwandlung der Farbstoffmischungen in Mischkristalle durch Erhitzen in Wasser auf die vorstehend genannten Temperaturen unter Zusatz eines oder mehrerer Emulgatoren und/oder Dispergiermittel durchgeführt.

Geeignete Dispergiermittel sind z. B. anionische oder nichtionische Dispergiermittel, die auch gemeinsam eingesetzt werden können. Anionische Dispergiermittel sind z. B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren. Alkyl- oder Alkylaryl-sulfonate, sowie Alkyl-arylpolyglykolethersulfate. Nichtionische Dispergiermittel oder Emulgatoren sind z. B. Umsetzungsprodukte von Alkylenoxiden, wie z. B. Ethylen- oder Propylenoxid mit alkylierbaren Verbindungen, wie z. B. Fettalkoholen, Fettaminen, Fettsäuren, Phenolen, Alkylphenolen, Arylalkylphenolen, Arylalkylarylphenolen und Carbonsäureamiden, wie z. B. Anlagerungsprodukte von 5 bis 10 Ethylenoxid-Einheiten an $C_8$-$C_{10}$-Alkylphenole.

Die Umwandlung der Farbstoffgemische in Mischkristalle durch Erhitzen in Wasser ist in der Regel nach 0,5 bis 10 Stunden, vorzugsweise 1 bis 3 Stunden, beendet.

Das Vorliegen von Mischkristallen kann durch Röntgenzählrohrdiagramme nachgewiesen werden.

Die erfindungsgemäßen Farbstoffmischungen sind als solche oder auch im Gemisch mit anderen Dispersionsfarbstoffen vorzüglich zum Färben und Bedrucken von hydrophoben synthetischen Fasermaterialien geeignet. Überraschenderweise sind sie, insbesondere, wenn sie im Verlauf ihrer Herstellung auf Temperaturen Über 80°C erhitzt worden sind oder wenn sie in Form von Mischkristallen vorliegen, den Einzelfarbstoffen im Hinblick auf färberisches Verhalten und coloristische Echtheiten, wie z. B. Egalisiervermögen, Thermomigration, Thermofixierechtheit, Wasser-, Wasch- und Reibechtheit, insbesondere im Aufbau- und Ausziehvermögen und der Temperaturempfindlichkeit, überlegen. Außerdem werden bei den erfindungsgemäßen Farbstoffmischungen auch bei einer Herabsetzung der Färbetemperaturen noch hervorragend farbstarke Färbungen bei ausgezeichneter Baderschöpfung erhalten.

Als hydrophobe synthetische Materialien kommen z. B. in Betracht: Cellulose-2 1/2-Acetat, Cellulosetriacetat, Polyamide und besonders hochmolekulare Polyester, wie z. B. Polyethylenglykoltherephthalat.

Vorzugsweise werden die erfindungsgemäßen Farbstoffmischungen zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Cellulosetriacetat eingesetzt. Diese Materialien können in Form von flächen- oder fadenförmigen Gebilden vorliegen und z. B. zu Garnen oder gewebten oder gestrickten Textilstoffen verarbeitet sein. Das Färben des genannten Fasergutes mit den erfindungsgemäßen Farbstoffmischungen erfolgt in an sich bekannter Weise, vorzugsweise aus wäßriger Suspension, gegebenenfalls in Gegenwart von Carriern, zwischen 80 bis ca. 110°C nach dem Ausziehverfahren oder nach dem HT-Verfahren im Färbeautoklav bei 110 bis 140° C, sowie nach dem sogenannten Thermofixierverfahren, wobei die Ware mit der Färbeflotte geklotzt und anschließend bei etwa 180° bis 230° C fixiert wird. Das Bedrucken der genannten Materialien kann so durchgeführt werden, daß die mit erfindungsgemäßen Farbstoffmischungen enthaltenden Druckpasten bedruckte Ware zur Fixierung des Farbstoffs, gegebenenfalls in Gegenwart eines Carriers, bei Temperaturen zwischen 110 bis 230°C mit HT-Dampf, Druckdampf oder Trockenhitze behandelt wird. Man erhält auf diese Weise sehr farbstarke blaue Färbungen und Drucke mit sehr guten Echtheitseigenschaften, insbesondere einer sehr guten Lichtechtheit und einer sehr guten Trockenhitzeplissier- und Fixierechtheit.

Die erfindungsgemäßen Farbstoffmischungen können auch zum Färben der vorstehend aufgeführten hydrophoben Materialien aus organischen Lösungsmitteln nach den hierbei bekannten Methoden und zum Färben in der Masse verwendet werden.

In den bei obigen Applikationen eingesetzten Färbeflotten und Druckpasten sollen die erfindungsgemäßen Farbstoffmischungen in möglichst feiner Verteilung vorliegen.

Die Feinverteilung der Farbstoffe erfolgt in an sich bekannter Weise dadurch, daß man die Farbstoffmischungen zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoffteilchen mechanisch so weit zerkleinert werden, daß eine optimale spezifische Oberfläche erreicht wird und die Sedimentation des Farbstoffs möglichst gering ist. Die Teilchengrößen der Farbstoffe liegen im allgemeinen zwischen 0,5 und 5 µm, vorzugsweise bei etwa 1 µm.

Die bei dem Mahlvorgang mitverwendeten Dispergiermittel können die bereits im Zusammenhang mit der Herstellung der Mischkristalle durch Erhitzen in Wasser genannten nichtionogenen oder anionaktiven Dispergiermittel sein.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 30 Gewichtsprozent und einen Dispergiermittelgehalt bis zu etwa 25 % eingestellt. Aus ökonomischen Gründen werden Farbstoffgehalte von 15 Gewichtsprozent meist nicht unterschritten.

Die Farbstoffzubereitungen können auch noch weitere Hilfsmittel enthalten, z. B. solche, die als Oxydationsmittel wirken, wie z. B. Natrium-m-nitrobenzolsulfonat oder fungicide Mittel, wie z. B. Natrium-o-phenyl-phenolat und Natriumn-penta-chlorphenolat.

Die so erhaltenen Farbstoffdispersionen können sehr vorteilhaft zum Ansatz von Druckpasten und Färbeflotten verwendet werden. Besondere Vorteile bieten sie z. B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff, Dispergiermittel und andere Hilfsmittel, wie z. B. Netz-, Oxydations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flussigkeit entzogen wird, z. B. durch Vakuumtrocknung, Gefriertrocknung durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser so weit verdünnt, daß sich für die Färbung ein Flottenverhältnis von 1 : 5 bis 1 : 50 ergibt.

Zusätzlich werden den Flotten im allgemeinen weitere Färbereihilfsmittel, wie Dispergier-, Netz- und Fixierhilfsmittel zugesetzt.

Soll der Farbstoff fur den Textildruck herangezogen werden, so werden die erforderlichen Mengen der Farbstoffeinstellungen zusammen mit Verdickungsmitteln, wie z. B. Alkali-Alginaten oder dgl., und gegebenenfalls weiteren Zusätzen, wie z. B. Fixierbeschleunigern, Netzmitteln und Oxydationsmitteln, zu Druckpasten verknetet.

Die Erfindung wird durch die folgenden Beispiele näher erläutert:

**Beispiel 1**

a) 18,0 g Kupfer-I-cyanid werden mit 2,0 g Natriumcyanid in 175 ml Dimethylsulfoxid 15 Minuten bei Raumtemperatur gerührt. Dann werden 52,7 g des Farbstoffs der Formel V

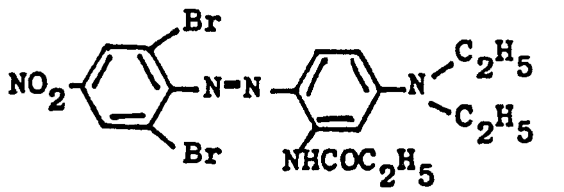 (V)

eingetragen, es wird auf 110 bis 115° C erwärmt und 1 Stunde bei dieser Temperatur gerührt. Dann wird bis zum Erkalten gerührt, abgesaugt, mit 25 ml Dimethylsulfoxid, Wasser, 5-%-igem wäßrigen Ammoniak und wieder mit Wasser gewaschen und unter vermindertem Druck getrocknet. Auf diese Weise erhält man den Farbstoff der Formel VI, der sich in o-Dichlorbenzol mit blauer Farbe löst.

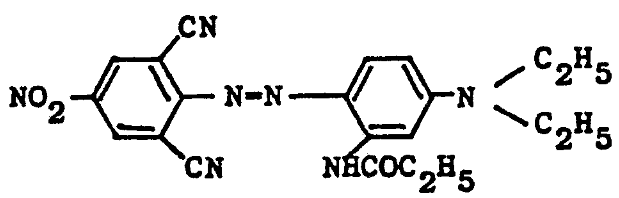 (VI)

b) Bei einer Wiederholung der obigen unter a) angegebenen Vorschrift werden anstelle von 52,7 g des Farbstoffs der Formel V 51,3 g des Farbstoffs der Formel VII

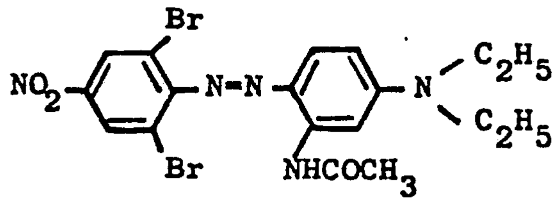

(VII)

eingesetzt. Man erhält dann den Farbstoff der Formel VIII

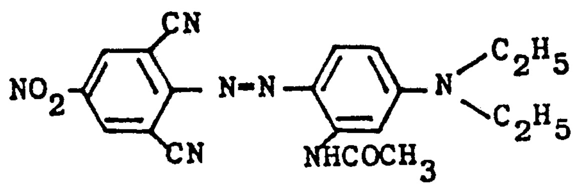

(VIII)

c) Je 15,75 g der nach den vorstehenden Beispielen 1a und 1b hergestellten Farbstoffe der Formeln VI und VIII werden gemeinsam in 243,7 g Wasser mit 43,6 g Natriumligninsulfonat und 12,6 g eines nichtionischen Dispergiermittels auf Basis Arylpolyglykolether (4-[(4'-Benzyl-)phenyl]phenol + 15 AeO) mit 50-%-iger Essigsäure auf einen pH-Wert von 5,9 gestellt und mit dem Zackenrührer homogenisiert. Dann wird die erhaltene Dispersion im Autoklaven innerhalb von 3 Stunden auf 120°C erwärmt und 2 Stunden bei dieser Temperatur gerührt. Nach dem Abkühlen werden 43,6 g eines Kondensationsproduktes aus Kresol, Formaldehyd und Naphthol-2-sulfonsäure-natrium-salz zugesetzt und die Dispersion mnit 50-%-iger Essigsäure auf pH 8,0 gestellt. Anschließend wird 2 Stunden bei Raumtemperatur in der Perlmühle bis zur Feinverteilung (80 % $\leq$ 1 µm) gemahlen, gesiebt und im Sprühtrockner gesprüht. Das so erhaltene Farbstoffpulver wird, wie nachfolgend unter d) beschrieben, zum Färben eingesetzt.

d) 2,34 g des nach Beispiel 1c erhaltenen Farbstoffs werden in 2000 g Wasser dispergiert. Die Dispersion wird mnit 4 g Ammoniumsulfat, 2 g eines handelsüblichen Dispergiermittels auf Basis eines Kondensationsproduktes aus Naphthalinsulfonsäurenatriumsalz und Formaldehyd und 2 g eines Kondensationsprodukts aus m-Kresol, Formaldehyd und Natriumsulfit versetzt und mit Essigsäure auf einen pH-Wert von 5,5 gestellt. In die so erhaltene Färbeflotte bringt man 100 g eines texturierten Polyestergewebes auf Basis Polyethylenglykolterephthalat ein und färbt 1 Stunde bei 125°C. Nach anschließendem Spülen, reduktiver Nachbehandlung mit einer 0,2-%-igen Natriumdithionitlösung während 15 Minuten bei 70 bis 80°C, Spülen und Trocknen, erhält man eine farbstarke blaue Färbung mit hervorragenden coloristischen Eigenschaften.

Bringt man zur Herstellung eines Nachzugs in das Färbebad nochmals 100 g eines texturierten Polyestergewebes auf Basis Polyethylenglykolterephthalat ein und färbt 1 Stunde bei 135°C und behandelt den Nachzug, wie vorstehend bei der eigentlichen Färbung angegeben, nach, so erhält man eine nahezu farblose Färbung.

e) Von den nach den Beispielen 1a und 1b hergestellten Einzelfarbstoffen sowie von den nach Beispiel 1c hergestellten Mischkristallen werden Röntgenzählrohrdiagramme in einem Siemens Röntgenzählrohrdiffractometer 11 mit $Cu_{\alpha}$-Strahlung aufgenommen. Die dabei erhaltenen Glanzwinkel 2 $\Theta$ mit relativen Intensitäten $\geq$ 10 %, bezogen auf den jeweils stärksten peak, dessen Intensität gleich 100 % gesetzt wurde, sind nachfolgend in Winkelgraden (mit den relativen Intensitäten in Klammern) angegeben:

ea) Farbstoff VI gemäß Beispiel 1a:

2 $\Theta$ = 5,77° (17,0 %); 7,38° (100 %); 8,0° (83,4 %); 8,30° (28,8 %); 9,92° (62,1 %); 12,63° (13,6 %); 13,27° (49,0 %); 14,88° (17,7 %); 18,56° (11,6 %); 20,20° (11,2 %); 21,43° (11,6 %); 23,91° (15,7 %); 26,06° (55,7 %); 27,20° (34,4 %); 27,96° (14,6 %).

eb-) Farbstoff VIII gemäß Beispiel 1b:

2 $\Theta$ = 6,86° (47,4 %); 9,92° (100 %); 12,34° (11,8 %); 13,77° (39,6 %); 14,66° (12,9 %); 17,37° (14,6 %); 20,13° (26,9 %); 21,49° (16,2 %); 21,83° (11,7 %); 22,54° (18,2 %); 23,76° (14,0 %); 24,88° (42,7 %); 26,71° (78,6 %); 18,91° (29,2 %).

ec) Farbstoff (Mischkristall aus den Farbstoffen VI und VIII im Gewichtsverhältnis 1: 1) gemäß Beispiel 1c:

2 $\Theta$ = 7,61° (100 %); 10,13° (60,4 %); 13,62° (60,1 %); 18,81° (10,4 %); 20,40° (13,3 %); 24,16° (19,1 %); 26,41° (34,1 %); 27,48° (11,0 %).

**Beispiel 2**

Bei einer Wiederholung des Beispiels 1a werden anstelle von 52,7 g des Farbstoffs V ein Gemisch von 26,35 g des Farbstoffs V and 25,65 g des Farbstoffs VII eingesetzt. Auf diese Weise erhält man einen Farbstoff, der ein Röntgenzählrohrdiagramn besitzt, das mit dem in Beispiel 1ec angegebenen Röntgenzählrohrdiagramm identisch ist.

**Beispiel 3**

30 g des Farbstoffs des Farbstoffs der Formel VIII und 30 g des Farbstoffs des Farbstoffs der Formel VI werden in 400 ml Dimethylsulfoxid heiß gelöst und filtriert. Die nach dem Abkühlen abgeschiedenen Mischkristalle werden abgesaugt, mit Wasser nachgewaschen und bei vermindertem Druck bei 50°C getrocknet. Die Mischkristalle zeigen das gleiche Röntgenzählrohrdiagramm wie im Beispiel 1ec.

In der nachstehenden Tabelle sind weitere erfindungsgemäße Farbstoffmischungen mit den Bedeutungen R, $R^1$ und $R^2$ und dem Gewichtsverhältnis der Einzelfarbstoffe der Formel I angegeben, die nach den vorstehenden Angaben herstellbar sind und die auf Polyestermaterialien ebenfalls farbstarke blaue Färbungen bzw. Drucke mit ebenfalls sehr guten coloristischen Eigenschaften liefern.

| Beispiel | $R^1$ | $R^2$ | R | Gewichts-verhältnis |
|---|---|---|---|---|
| 4 | $C_2H_5$ | $C_2H_5$ | $CH_3$ | 2 |
| | $C_2H_5$ | $C_2H_5$ | $C_2H_5$ | 1 |
| 5 | $C_2H_5$ | $C_2H_5$ | $CH_3$ | 1 |
| | $C_2H_5$ | $C_2H_5$ | $C_2H_5$ | 2 |
| 6 | n-$C_3H_7$ | n-$C_3H_7$ | $CH_3$ | 1 |
| | n-$C_3H_7$ | n-$C_3H_7$ | $C_2H_5$ | 1 |
| 7 | n-$C_3H_7$ | n-$C_3H_7$ | $CH_3$ | 3 |
| | $C_2H_5$ | $C_2H_5$ | $C_2H_5$ | 4 |
| 8 | n-$C_4H_9$ | n-$C_4H_9$ | $CH_3$ | 2 |
| | $C_2H_5$ | $C_2H_5$ | $C_2H_5$ | 3 |
| 9 | $C_2H_5$ | i-$C_3H_7$ | $CH_3$ | 1 |
| | $C_2H_5$ | $C_2H_5$ | $C_2H_5$ | 3 |
| 10 | $C_2H_5$ | $C_2H_5$ | $CH_3$ | 1 |
| | $CH_3$ | n-$C_4H_9$ | $C_2CH_5$ | 1 |
| 11 | n-$C_3H_7$ | n-$C_3H_7$ | $CH_3$ | 2 |
| | $C_2H_5$ | $C_2H_5$ | $C_2H_5$ | 1 |
| 12 | n-$C_4H_9$ | n-$C_4H_9$ | $CH_3$ | 3 |
| | $C_2H_5$ | $C_2H_5$ | n-$C_3H_7$ | 4 |
| 13 | $CH_3$ | i-$C_4H_9$ | $CH_3$ | 1 |
| | $C_2H_5$ | $C_2H_5$ | n-$C_3H_7$ | 3 |
| 14 | $C_2H_5$ | $C_2H_5$ | $CH_3$ | 1 |
| | $C_2H_5$ | i-$C_3H_7$ | n-$C_3H_7$ | 1 |
| 15 | $C_2H_5$ | $C_2H_5$ | $CH_3$ | 5 |
| | $C_2H_5$ | $C_2H_5$ | i-$C_3H_7$ | 7 |
| 16 | n-$C_3H_7$ | n-$C_3G_7$ | $CH_3$ | 1 |
| | $C_2H_5$ | $C_2H_5$ | i-$C_3H_7$ | 1 |
| 17 | $C_2H_5$ | $C_2H_5$ | $CH_3$ | 3 |
| | $C_2H_5$ | $C_2H_5$ | n-$C_4H_9$ | 7 |
| 18 | n-$C_4H_9$ | n-$C_4H_9$ | $C_2H_5$ | 2 |
| | $C_2H_5$ | $C_2H_5$ | i-$C_4H_9$ | 1 |
| 19 | $C_2H_5$ | $C_2H_5$ | n-$C_3H_7$ | 1 |
| | $C_2H_5$ | $C_2H_5$ | sek. $C_4H_9$ | 1 |
| 20 | n-$C_3H_5$ | n-$C_3H_7$ | $CH_3$ | 1 |

| | | | | |
|---|---|---|---|---|
| | $C_2H_5$ | $C_2H_5$ | $n\text{-}C_5H_{11}$ | 2 |
| 21 | $C_2H_5$ | $i\text{-}C_3H_7$ | $C_2H_5$ | 1 |
| | $C_2H_5$ | $i\text{-}C_3H_7$ | $CH(CH_3)\text{-}C_3H_7$ | 1 |
| 22 | $C_2H_5$ | $C_2H_5$ | $C_2H_5$ | 1 |
| | $CH_3$ | $CH_3$ | $CH(C_2H_5)_2$ | 1 |
| 23 | $C_2H_5$ | $C_2H_5$ | $C_2H_5$ | 1 |
| | $C_2H_5$ | $C_2H_5$ | $n\text{-}C_3H_7$ | 2 |
| | $C_2H_5$ | $C_2H_5$ | $i\text{-}C_3H_7$ | 2 |
| 24 | $C_2H_5$ | $C_2H_5$ | $CH_3$ | 1 |
| | $C_2H_5$ | $C_2H_5$ | $C_2H_5$ | 1 |
| | $C_2H_2$ | $C_2H_5$ | $n\text{-}C_3H_7$ | 1 |
| | $C_2H_5$ | $C_2H_5$ | $i\text{-}C_3H_7$ | 1 |
| 25 | $C_2H_5$ | $C_2H_5$ | $C_2H_5$ | 1 |
| | $n\text{-}C_3H_7$ | $n\text{-}C_3H_7$ | $i\text{-}C_3H_7$ | 1 |
| 26 | $C_2H_5$ | $C_2H_5$ | $C_2H_5$ | 2 |
| | $i\text{-}C_3H_7$ | $C_2H_5$ | $i\text{-}C_3H_7$ | 1 |
| 27 | $C_2H_5$ | $C_2H_5$ | $n\text{-}C_3H_7$ | 1 |
| | $C_2H_5$ | $C_2H_5$ | $i\text{-}C_3H_7$ | 1 |
| 28 | $C_2H_5$ | $C_2H_5$ | $n\text{-}C_3H_7$ | 2 |
| | $C_2H_5$ | $C_2H_5$ | $i\text{-}C_3H_7$ | 1 |
| 29 | $n\text{-}C_3H_7$ | $n\text{-}C_3H_7$ | $n\text{-}C_3H_7$ | 1 |
| | $C_2H_5$ | $C_2H_5$ | $i\text{-}C_3H_7$ | 1 |

**Patentansprüche**

Mischungen von Monoazofarbstoffen, dadurch gekennzeichnet, daß sie zwei oder mehr verschiedene Farbstoffe der Formel I

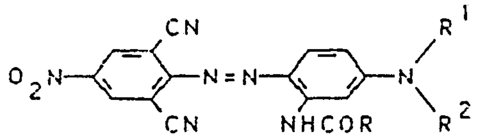

(I)

worin $R^1$ und $R^2$ unabhängig voneinander lineares oder verzweigtes Alkyl mit 1 bis 4 C-Atomen und R lineares oder verzweigtes Alkyl mit 1 bis 5 C-Atomen bedeuten und wobei sich die Farbstaffe zumindest in den Resten R unterscheiden enthalten, wobei solche Mischungen aus mindestens zwei verschiedenen Farbstoffen der Formel I, in welcher $R^1$ und $R^2$ Ethyl oder n-Propyl und R Methyl, Ethyl oder n-Propyl bedeuten und in denen mindestens eine Farbstoffkomponente mit R = n-Propyl enthalten ist, ausgeschlossen sind.

2. Farbstoffmischung nach Anspruch 1, dadurch gekennzeichnet, daß der Gewichtsanteil eines Farbstoffs der Formel I 10 % bis 90 % vorzugsweise 30 bis 70 % beträgt.

3. Farbstoffmischung nach Anspruch 1 oder 2, dadurch gekennzeichnet daß sie zwei verschiedene Farbstoffe der Formel I enthält.

4. Farbstoffmischung nach einem oder mehreren der Ansprüche 1 bis 3, dadurch gekennzeichnet, daß $R^1$ und $R^2$ lineares Alkyl mit 2 bis 4 C Atomen, vorzugsweise Ethyl oder n-Propyl und R Alkyl mit 1 bis 3 C Atomen bedeuten.

5. Farbstoffmischung nach einem oder mehreren der Ansprüche 1 bis 4, dadurch gekennzeichnet, daß sich die verschiedenen Farbstolle der Formel I nur durch verschiedene Bedeutungen der Reste R unterscheiden.

6. Farbstoffmischung nach einem oder mehreren der Ansprüche 1 bis 5, dadurch gekennzeichnet, daß sie einen Farbstoff mit R = n-Propyl enthält.

7. Farbstoffmischung nach einem oder mehreren der Ansprüche 1 bis 6, dadurch gekennzeichnet, daß sie oder ihre Einzelfarbstoffe auf eine Temperatur von mindestens 80°C erhitzt worden sind.

8. Farbstoffmischung nach einem oder mehreren der Ansprüche 1 bis 7, dadurch gekennzeichnet, daß sie in Form von Mischkristallen vorliegt.

9. Verfahren zum Herstellung der in einem oder mehreren der Ansprüche 1 bis 8 genannten Farbstoffmishungen, daurch gekennzeichnet, daß

a) mindestens zwei Einzelfarbstoffe der Formel I miteinander gemischt werden oder

b) ein Amin der Formel II

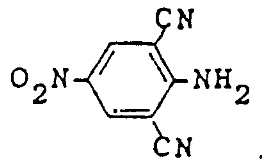

(II)

in diazotierter Form auf eine Mischung aus mindestens zwei verschiedenen Kupplungskomponenten der Formel III

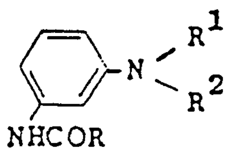

(III)

gekuppelt wird, oder

c) daß in Farbsstoffmischungen, die aus mindestens zwei Farbstoffen der Formel IV

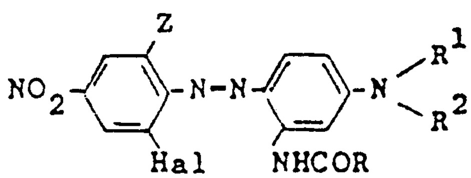

(IV)

bestehen, worin Z für Cyan oder Halogen und Hal für Halogen steht, in an sich bekannter Weise Halogen gegen Cyan ausgetauscht wird, wobei R, $R^1$ und $R^2$ die in den Anspruchen 1 bis 6 genannten Bedeutungen besitzen, und die Farbstoffmischung gegebenenfalls in eine Farbstoffzubereitung überführt wird.

10. Verfahren zur Herstellung der in einem oder mehreren der Ansprüche 1 bis 8 genannten Farbstoffmischungen, dadurch gekennzeichnet, daß eine Mischung aus mindestens zwei verschiedenen Farbstoffen der Formel I umkristallisiert oder gelöst und gefällt oder angelöst wird oder daß eine Mischung aus mindestens zwei verschiedenen Farbstoffen der Formel I in Wasser bei Temperaturen von 80 bis 190°C, insbesondere 90 bis 150°C, vorzugsweise 100 bis 140°C, in Gegenwart eines oder mehrerer Emulgatoren und/oder Dispergiermittel erhitzt wird und die Farbstoffmischung gegebenenfalls in eine Farbstoffzubereitung überführt wird.

11. Verfahren zum Färben und Bedrucken von hydrophoben Fasermaterialien, dadurch gekennzeichnet, daß eine Farbstoffmischung nach einem oder mehreren der Ansprüche 1 bis 8 verwendet wird.

**Claims**

1. Mixtures of monoazo dyestuffs, characterised in that they contain two or more different dyestuffs of the formula I

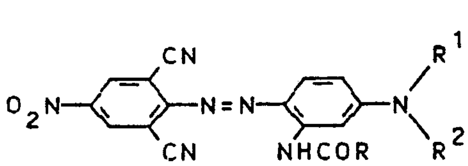

(I)

wherein $R^1$ and $R^2$, independently of each other, denote linear or branched alkyl having 1 to 4 C atoms and R denotes linear or branched alkyl having 1 to 5 C atoms, and where the dyestuffs differ from each other at least in the R radicals, with the exclusion of mixtures of at least two different dyes of formula I wherein $R^1$ and $R^2$ denote ethyl or n-propyl and R denotes methyl, ethyl or n-propyl and in which at least one dye component wherein R denotes n-propyl is contained.

2. A dyestuff mixture according to Claim 1, characterised in that the proportion by weight of a dyestuff of the

formula I is 10 % to 90 %, preferably 30 to 70 %.

3. A dyestuff mixture according to Claim 1 or 2, characterised in that it contains two different dyestuffs of the formula I.

4. A dyestuff mixture according to one or more of Claims 1 to 3, characterised in that $R^1$ and $R^2$ denote linear alkyl having 2 to 4 C atoms, preferably ethyl or n-propyl, and R denotes alkyl having 1 to 3 C atoms.

5. A dyestuff mixture according to one or more of Claims 1 to 4, characterised in that the different dyestuffs of the formula I only differ by different meanings of the R radicals.

6. Dyestuff mixture according to one or several of Claims 1 to 5, characterised in that it contains a dyestuff wherein R denotes n-propyl.

7. A dyestuff mixture according to one or more of Claims 1 to 6, characterised in that it or its individual dyestuffs have been heated to a temperature of at least 80° C.

8. A dyestuff mixture according to one or more of Claims 1 to 7, characterised in that it is in the form of mixed crystals.

9. A process for preparing the dyestuff mixtures mentioned in one or more of Claims 1 to 8, characterised in that

a) at least two individual dyestuffs of the formula I are mixed with each other or

b) an amine of the formula II

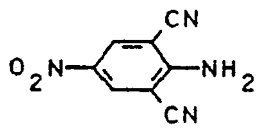

(II)

is coupled in diazotised form onto a mixture of at least two different coupling components of the formula III

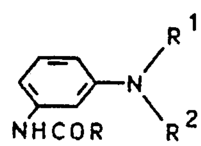

(III)

c) the halogen in dyestuff mixtures which consist of at least two dyestuffs of the formula IV

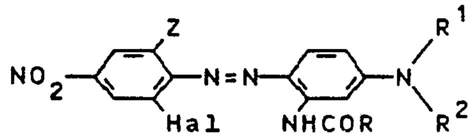

(IV)

wherein Z represents cyano or halogen and Hal represents halogen, is replaced in a manner known per se by cyano, R, $R^1$ and $R^2$ having the meanings mentioned in Claims 1 to 6, and if desired the dyestuff mixture is converted into a dyestuff preparation.

10. A process for preparing the dyestuff mixtures mentioned in one or more of Claims 1 to 8, characterised in that a mixture of at least two different dyestuffs of the formula I is recrystallised or dissolved and precipitated or partially dissolved, or a mixture of at least two different dyestuffs of the formula I is heated in water in the presence of one or more emulsifiers and/or dispersants at temperatures of 80 to 190° C, in particular 90 to 150° C, preferably 100 to 140° C, and if desired the dyestuff mixture is converted into a dyestuff preparation.

11. A process for dyeing and printing hydrophobic fibre materials, characterised in that a dyestuff mixture according to one or more of Claims 1 to 8, is used.

**Revendications**

1. Mélanges de colorants monoazoïques, caractérisés en ce qu'ils contiennent deux ou plus de deux colorants différents répondant chacun à la formule I :

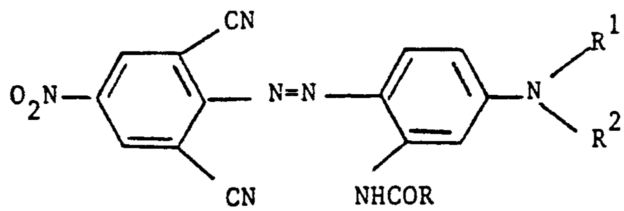

(I)

(dans laquelle $R^1$ et $R^2$ représentent, indépendamment l'un de l'autre, un radical alkyle linéaire ou ramifié ayant 1 à 4 atomes de carbone, et R représente un radical alkyle linéaire ou ramifié ayant 1 à 5 atomes de carbone, et les colorants diffèrent au moins par le sens des restes R), de tels mélanges constitués d'au moins deux colorants differents de formule I, dans laquelle $R^1$ et $R^2$ représentent un radical éthyle ou n-propyle et R représente un radical méthyle, éthyle ou n-propyle et qui comportent au moins un colorant dans lequel R représente un radical n-propyle, étant exclus.

2. Mélange de colorants selon la revendication 1, caractérisé en ce que la proportion pondérale d'un colorant de formule I représente 10 % à 90 %, avantageusement 30 à 70 %.

3. Mélange de colorants selon la revendication 1 ou 2, caractérisé en ce qu'il contient deux colorants différents de formule I.

4. Mélange de colorants selon une ou plusieurs des revendications 1 à 3, caractérisé en ce que $R^1$ et $R^2$ représentent chacun un radical alkyle linéaire ayant 2 à 4 atomes de carbone, avantageusement un radical éthyle ou n-propyle, et R représente un radical alkyle ayant 1 à 3 atomes de carbone.

5. Mélange de colorants selon une ou plusieurs des revendications 1 à 4, caractérisé en ce que les différents colorants de formule I ne diffèrent que par des sens différents des restes R.

6. Mélange de colorants selon une ou plusieurs des revendications 1 à 5, caractérisé en ce qu'il contient un colorant dans lequel R représente un radical n-propyle.

7. Mélange de colorants selon une ou plusieurs des revendications 1 à 6, caractérisé en ce que ce mélange, ou les colorants individuels, a ou ont été chauffés à une température d'au moins 80° C.

8. Mélange de colorants selon une ou plusieurs des revendications 1 à 7, caractérisé en ce qu'il est présent sous forme de cristaux mixtes.

9. Procédé pour préparer les mélanges de colorants cités dans une ou plusieurs des revendications 1 à 8, caractérisé en ce que :

a) on mélange l'un avec l'autre au moins deux colorants individuels de formule I, ou

b) on copule une amine de formule II :

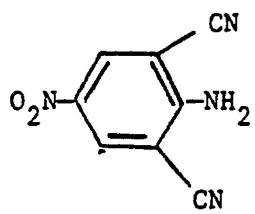

(II)

sous sa forme diazotée, sur un mélange d'au moins deux copulants différents de formule III :

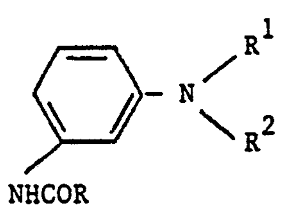

(III)

ou,

c) on remplace de façon connue, dans des mélanges de colorants consistant en au moins deux colorants de formule IV :

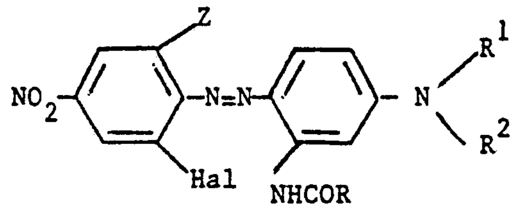

(IV)

(dans laquelle Z représente un groupe cyano ou un atome d'halogène et Hal représente un atome d'halogène), l'halogène par un groupe cyano, R, $R^1$ et $R^2$ ayant les sens indiqués aux revendications 1 à 6, et l'on transforme éventuellement le mélange des colorants en une préparation de colorants.

10. Procédé pour préparer les mélanges de colorants cités dans une ou plusieurs des revendications 1 à 8, caractérisé en ce qu'on fait recristalliser ou l'on dissout un mélange d'au moins deux colorants différents répondant chacun à la formule I et on les précipite ou on en provoque un début de dissolution ou bien on chauffe un mélange d'au moins deux colorants différents de formule I dans de l'eau à des températures de 80 à 190°C, en particulier de 90 à 150°C, avantageusement de 100 à 140°C, en présence d'un ou plusieurs émulsifiants et/ou agents de dispersion, et l'on transforme éventuellement le mélange des colorants en une préparation de colorants.

11. Procédé pour teindre et imprimer des matières en fibres hydrophobes, caractérisé en ce qu'on utilise un mélange de colorants selon une ou plusieurs des revendications 1 à 8.